# EUROPEAN PATENT APPLICATION

(11) **EP 4 586 588 A1**
(43) Date of publication of application: **16.07.2025**
(21) Application number: 23883004.6
(22) Date of filing: 19.10.2023
(51) Int. Cl.: H04L 67/125, H04L 67/50, H04L 67/303, H04L 67/306, H04L 67/00, G16Y 10/80, G16Y 40/30, H04L 12/28

(54) **IOT DEVICE CONTROL DEVICE AND CONTROL METHOD**

(30) Priority: 28.10.2022 KR 20220141759
(71) Applicant: Samsung Electronics Co., Ltd., Suwon-si, Gyeonggi-do 16677 (KR)
(72) Inventor: KHAN, Faisal, Suwon-si, Gyeonggi-do 16677 (KR); KUMAR MAJUMDER, Anjan, Suwon-si, Gyeonggi-do 16677 (KR); KHAN, Md. Mahmud Muntakim, Suwon-si, Gyeonggi-do 16677 (KR); ISLAM, Muhammad Mushfiqul, Suwon-si, Gyeonggi-do 16677 (KR)
(74) Representative: Appleyard Lees IP LLP
(86) International application number: PCT/KR2023/016257
(87) International publication number: WO 2024/090897

(57) **Abstract**

A method of controlling an Internet of Things (IoT) device, according to an embodiment, may include obtaining device information regarding a function that the IoT device is capable of performing, obtaining context information related to a user's behavior, determining, based on the device information and the context information, at least one recommended application for controlling the IoT device, preloading data required to launch the at least one recommended application, and launching selected at least one recommended application according to an external input signal for selecting at least one of the at least one recommended application.

## Description

### Technical Field

Various embodiments relate to an apparatus and method for controlling an Internet of Things (IoT) device via an application or function determined based on context information.

### Background Art

With recent developments in communication technology, services using wired or wireless communication networks for electronic devices are becoming more common. It is also becoming possible for electronic devices to control each other by using wireless communication therebetween. For example, traditionally, remote controls were mainly used to control electronic devices (e.g., a television (TV), an air conditioner, a media player, etc.), but recently, it has become increasingly possible to control electronic devices via a smartphone by using applications installed on the smartphone.

### Disclosure of Invention

### Solution to Problem

A method for controlling an Internet of Things (IoT) device, according to an embodiment, may include obtaining device information regarding a function that the IoT device is capable of performing.

According to an embodiment, the method for controlling the IoT device may include obtaining context information related to a user's behavior.

According to an embodiment, the method for controlling the IoT device may include determining, based on the device information and the context information, at least one recommended application for controlling the IoT device.

According to an embodiment, the method for controlling the IoT device may include preloading data required to launch the at least one recommended application.

According to an embodiment, the method for controlling the IoT device may include, according to an external input signal for selecting at least one of the at least one recommended application, launching the selected at least one recommended application.

An electronic device according to an embodiment may include a memory storing at least one instruction, and at least one processor.

The at least one processor may be configured to execute the at least one instruction to obtain device information regarding a function that the IoT device is capable of performing.

The at least one processor may be configured to execute the at least one instruction to obtain context information related to a user's behavior.

The at least one processor may be configured to execute the at least one instruction to determine, based on the device information and the context information, at least one recommended application for controlling the IoT device.

The at least one processor may be configured to execute the at least one instruction to preload data required to launch the at least one recommended application.

The at least one processor may be configured to execute the at least one instruction to, according to an external input signal for selecting at least one of the at least one recommended application, launch the selected at least one recommended application.

A computer-readable recording medium according to an embodiment may have stored thereon a program for performing a method for controlling an IoT device according to an embodiment.

### Brief Description of Drawings

FIG. 1 is a block diagram illustrating a configuration of an electronic device and an Internet of Things (IoT) device, according to an embodiment.
FIG. 2 is a flowchart of a method, performed by an electronic device, for controlling an IoT device, according to an embodiment.
FIG. 3 is a diagram illustrating a method, performed by an electronic device, for obtaining device information regarding a function that an IoT device is capable of performing, according to an embodiment.
FIG. 4 is a diagram illustrating a process by which a context analyzer determines a recommended application based on device information and context information, according to an embodiment.
FIG. 5 is a diagram illustrating a process by which an electronic device determines a recommended application for controlling an IoT device, based on device information and context information, according to an embodiment.
FIG. 6 is a diagram illustrating a process by which an electronic device controls an IoT device, according to an embodiment.
FIG. 7 is a diagram illustrating a process by which an electronic device preloads data required to launch a recommended application, according to an embodiment.
FIG. 8 is a diagram illustrating a process by which an electronic device performs in advance an update required to launch a recommended application, according to an embodiment.
FIG. 9 is a diagram illustrating a process by which an electronic device determines recommended applications or functions and displays a recommendation list, according to an embodiment.
FIG. 10 is a diagram illustrating a process by which an electronic device preloads data required to launch a recommended application according to a change in context information, according to an embodiment.
FIG. 11 is a diagram illustrating a process by which an electronic device displays an application recommendation list, according to an embodiment.
FIG. 12 is a diagram illustrating a process by which an electronic device rearranges recommended applications according to a change in context information, according to an embodiment.
FIG. 13 is a diagram illustrating a process by which an electronic device rearranges recommended applications in order of priority according to a change in context information, according to an embodiment.
FIG. 14 is a diagram illustrating a favorites list on an electronic device, according to an embodiment.
FIG. 15 is a diagram illustrating shortcut setting on an electronic device, according to an embodiment.
FIG. 16 is a diagram illustrating switching of a connection from an IoT device to another IoT device, according to an embodiment.
FIG. 17 is a flowchart illustrating a method, performed by an electronic device, for controlling an IoT device, according to an embodiment.
FIG. 18 is a diagram illustrating at least one recommended function on an application when the application controlling an IoT device is used on an electronic device, according to an embodiment.
FIG. 19 is a diagram illustrating a process by which an electronic device redirects to a menu for controlling an IoT device according to an external input signal for selecting at least one of at least one recommended function, according to an embodiment.

### Mode for the Invention

Embodiments will be described more fully hereinafter with reference to the accompanying drawings so that they may be easily implemented by one of ordinary skill in the art. However, the disclosure may be implemented in various different forms and is not limited to the embodiments described herein. In addition, parts not related to descriptions of the disclosure are omitted to clearly explain the disclosure in the drawings, and like reference numerals denote like elements throughout.

Moreover, in the specification, when a component is referred to as being "connected" or "coupled" to another component, this includes a case where the component is directly connected to the other component as well as a case where it is coupled to the other component with another intervening component therebetween. Furthermore, when a component "includes" or "comprises" another component, unless there is a particular description contrary thereto, it is understood that the component may further include other components, not excluding the other components.

Furthermore, although the terms including an ordinal number such as "first", "second", etc. may be used herein to describe various elements or components, these elements or components should not be limited by the terms. The terms are only used to distinguish one element or component from another element or component.

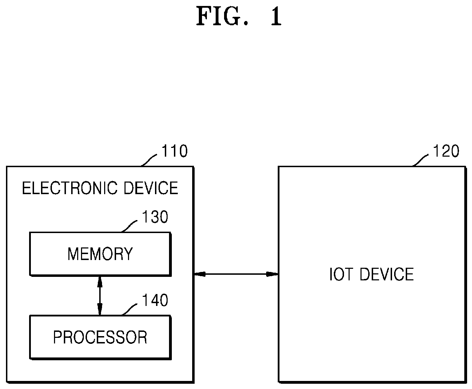

FIG. 1 is a block diagram illustrating a configuration of an electronic device 110 and an Internet of Things (IoT) device 120, according to an embodiment.

Referring to FIG. 1, the electronic device 110 may include a memory (130) and a processor 140.

In an embodiment, the memory 130 may store various pieces of data, programs, or applications for driving and controlling the electronic device 110.

In an embodiment, a program stored in the memory 130 may include one or more instructions. The program (one or more instructions) or application stored in the memory 130 may be executed by the processor 140.

In an embodiment, the processor 140 controls all operations of the electronic device 110 and a flow of signals between the internal components of the electronic device 110, and performs a function of processing data.

In an embodiment, the processor 140 may include a single core, a dual core, a triple core, a quad core, and a number of cores equal to multiples thereof. Furthermore, the processor 140 may include a plurality of processors. For example, the processor 140 may be implemented as a main processor (not shown) and a sub processor (not shown) operating in a sleep mode.

In an embodiment, the processor 140 may include at least one of a central processing unit (CPU), a graphics processing unit (GPU), and a video processing unit (VPU). Alternatively, according to an embodiment, the processor 140 may be implemented as a system on chip (SoC) that integrates at least one of a CPU, a GPU, and a VPU. Alternatively, the processor 140 may further include a neural processing unit (NPU).

In an embodiment, the processor 140 may obtain device information regarding a function that the IoT device 120 is capable of performing. In an embodiment, the processor 140 may obtain context information related to a user's behavior.

In an embodiment, the processor 140 may determine at least one recommended application for controlling the IoT device 120, based on the device information and the context information.

In an embodiment, the processor 140 may preload data required to launch the at least one recommended application.

In an embodiment, the processor 140 may launch at least one recommended application selected according to an external input signal for selecting at least one of the at least one recommended application.

In an embodiment, in case that an application controlling the IoT device 120 is used, the processor 140 may determine, based on device information and context information, at least one recommended function that can be performed by the application.

In an embodiment, the processor 140 may preload data required to execute the at least one recommended function.

In an embodiment, the processor 140 may receive an external input signal for selecting at least one of the at least one recommended function.

In an embodiment, the processor 140 may redirect to a menu for controlling the IoT device 120 according to the received external input signal.

In an embodiment, the IoT device 120 may include at least one of a TV, a light, a speaker, a smart watch, a refrigerator, an air conditioner, a door lock, or a tablet. However, the disclosure is not limited thereto.

In an embodiment, the electronic device 110 may wirelessly communicate with the IoT device 120. In an embodiment, the electronic device 110 may communicate with the IoT device 120 by using at least one of Bluetooth, Wi-Fi, or ultra-wideband (UWB). However, the disclosure is not limited thereto. In an embodiment, the electronic device 110 may control the IoT device 120 by transmitting and receiving wireless communication signals to and from the IoT device 120.

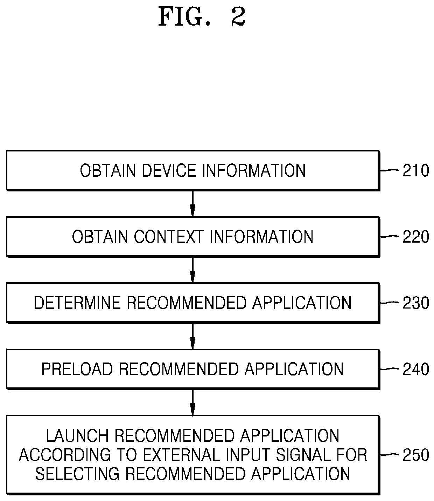

FIG. 2 is a flowchart of a method, performed by the electronic device 110, for controlling the IoT device 120, according to an embodiment.

Referring to FIG. 2, in operation 210, the electronic device 110 may obtain device information regarding a function that the IoT device 120 is capable of performing. In an embodiment, the device information may include at least one of information about a type of the IoT device 120 and information about a function that the IoT device 120 is capable of performing.

In an embodiment, the information about the type of the IoT device may represent information including, for example, at least one of a TV, a refrigerator, or an air conditioner. In an embodiment, the information about the function that the IoT device is capable of performing may represent information including, for example, at least one of a sound function, a monitor function, a display function, a storage function, or an application support function. However, the disclosure is not limited thereto.

In operation 220, the electronic device 110 may obtain context information related to the user's behavior. The context information may refer to information that is understood according to a surrounding situation, environment, or context. In an embodiment, the context information may include, for example, at least one of information stored by the user, information learned by the user's behavior, information obtained by a proximity sensor, or information associated with the context information. However, the disclosure is not limited thereto.

In an embodiment, the information stored by the user may be information stored or set by the user. For example, the information stored by the user may be alarm information set by the user via the electronic device 110 or schedule information stored by the user via the electronic device 110. In an embodiment, the electronic device 110 may obtain the information stored by the user as the context information.

In an embodiment, the information learned by the user's behavior may represent information learned by the electronic device 110 based on the user's behavior or pattern. In an embodiment, the information learned by the user's behavior may include information learned by the electronic device 110 through actions or tasks that are repeatedly performed by the user as a routine. For example, the electronic device 110 may learn information such as the user's wake-up time, bedtime, or going-out time. In an embodiment, the electronic device 110 may obtain the information learned by the user as the context information.

In an embodiment, the information obtained by the proximity sensor may represent information obtained by the electronic device 110 from the IoT device 120 in close proximity to the user. For example, when the user is in close proximity to a TV, the electronic device 110 may obtain, from the TV, information indicating that the user may also use a function of the TV. In an embodiment, the IoT device 120 may include a proximity sensor or a directional ultra-wideband (UWB). In an embodiment, the IoT device 120 may analyze a context by using the proximity sensor or directional UWB antenna. In an embodiment, the electronic device 110 may obtain the information obtained by the proximity sensor as the context information.

In an embodiment, the information associated with the context information may be information that the electronic device 110 determines to be relevant based on the context information related to the user's behavior. For example, when a user sets an alarm or schedule via the electronic device 110, the electronic device 110 may determine that at least one of weather information, traffic information, meeting information, or bookmark information for that current day is associated information based on the set alarm or schedule information. In an embodiment, the electronic device 110 may obtain the information associated with the context information as the context information.

In operation 230, the electronic device 110 may determine, based on the device information and the context information, at least one recommended application for controlling the IoT device 120. For example, when it is determined, based on the device information and the context information, that the user needs to control an indoor temperature by running an air conditioner, the electronic device 110 may determine an application capable of controlling the air conditioner as at least one recommended application.

In operation 240, the electronic device 110 may preload data required to launch (or run or execute) the at least one recommended application determined based on the device information and the context information. In an embodiment, preloading data required to launch (or run or execute) at least one recommended application may refer to preloading at least one of a system resource or a plug-in required to launch (or run or execute) the at least one recommended application in the background on the device. However, the disclosure is not limited thereto. By preloading the data required to launch (or run or execute) the at least one recommended application, the application may be launched (or executed) without requiring a load time when the user launches (or runs or executes) the application.

In operation 250, the electronic device 110 may launch (or run or execute) at least one recommended application selected according to an external input signal for selecting at least one of the at least one recommended application. In an embodiment, the external input signal may represent an external input signal received by a display of the electronic device 110, as an input device, which is configured as a touch screen. However, the disclosure is not limited thereto.

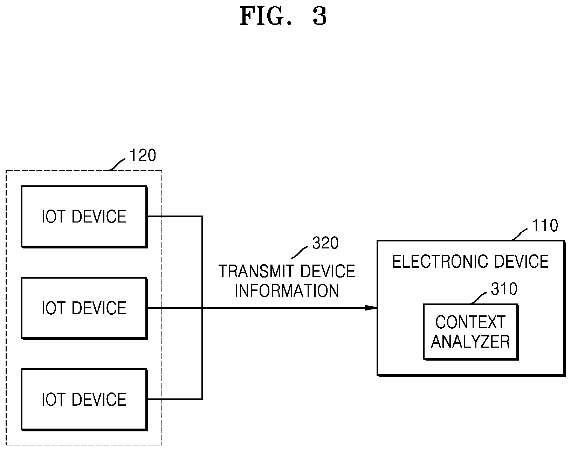

FIG. 3 is a diagram illustrating a method, performed by the electronic device 110, for obtaining device information regarding a function that the IoT device 120 is capable of performing, according to an embodiment.

Referring to FIG. 3, in operation 320, the electronic device 110 may obtain, from the IoT device 120, device information regarding a function that the IoT device 120 is capable of performing. In an embodiment, the electronic device 110 may communicate with the IoT device 120 by using at least one of Bluetooth, Wi-Fi, or UWB. However, the disclosure is not limited thereto.

In an embodiment, the electronic device 110 may include a context analyzer (310). In an embodiment, the context analyzer 310 may analyze a context based on the device information. In an embodiment, the context analyzer 310 may analyze a context based on context information.

In an embodiment, the context analyzer 310 may determine at least one recommended application based on the device information. In an embodiment, the context analyzer 310 may determine at least one recommended application based on the context information.

In an embodiment, when an application controlling the IoT device 120 is used, the context analyzer 310 may determine, based on the device information, at least one recommended function that can be performed by the application. In an embodiment, when an application controlling the IoT device 120 is used, the context analyzer 310 may determine, based on the context information, at least one recommended function that can be performed by the application.

In an embodiment, the context analyzer 310 may rearrange at least one recommended application according to a change in the context information. In an embodiment, when an application controlling the IoT device 120 is used, the context analyzer 310 may rearrange at least one recommended function according to a change in the context information.

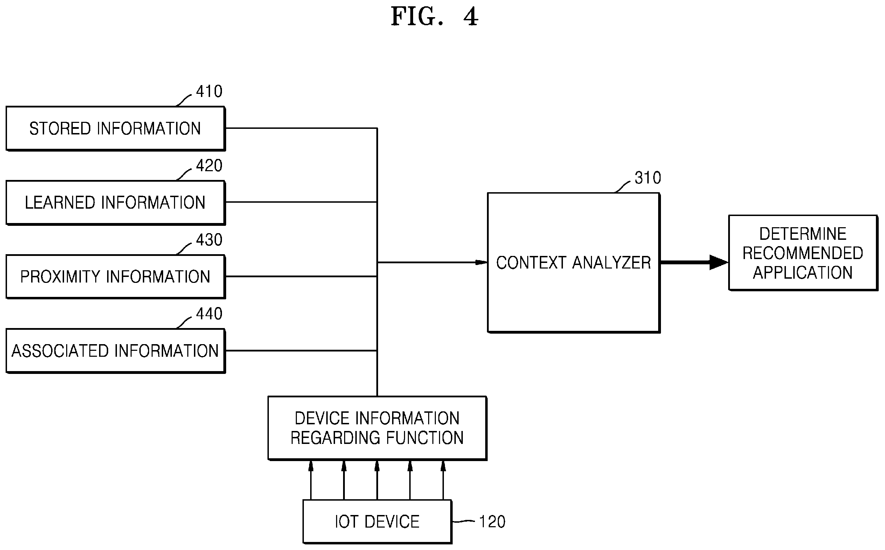

FIG. 4 is a diagram illustrating a process by which the context analyzer 310 determines a recommended application based on device information and context information, according to an embodiment.

Referring to FIG. 4, the context analyzer 310 may analyze a context based on device information. In an embodiment, the context analyzer may analyze a context based on context information.

In an embodiment, the device information may include at least one of information about a type of the IoT device 120 or information about a function that the IoT device 120 is capable of performing.

Because the device information has been described in detail with reference to FIG. 1, a detailed description thereof will be omitted herein.

In an embodiment, the context information may include at least one of information 410 stored by the user, information 420 learned by the user's behavior, information 430 obtained by a proximity sensor, or information 440 associated with the context information. However, the disclosure is not limited thereto.

Because the context information has been described in detail with reference to FIG. 1, a detailed description thereof will be omitted herein.

In an embodiment, the context analyzer 310 may determine at least one recommended application based on the device information and the context information. In an embodiment, when an application controlling the IoT device 120 is used, the context analyzer 310 may determine, based on the device information, at least one recommended function that can be performed by the application.

In an embodiment, the context analyzer 310 may rearrange at least one recommended application according to a change in the context information. In an embodiment, when an application controlling the IoT device 120 is used, the context analyzer may rearrange at least one recommended function according to a change in the context information.

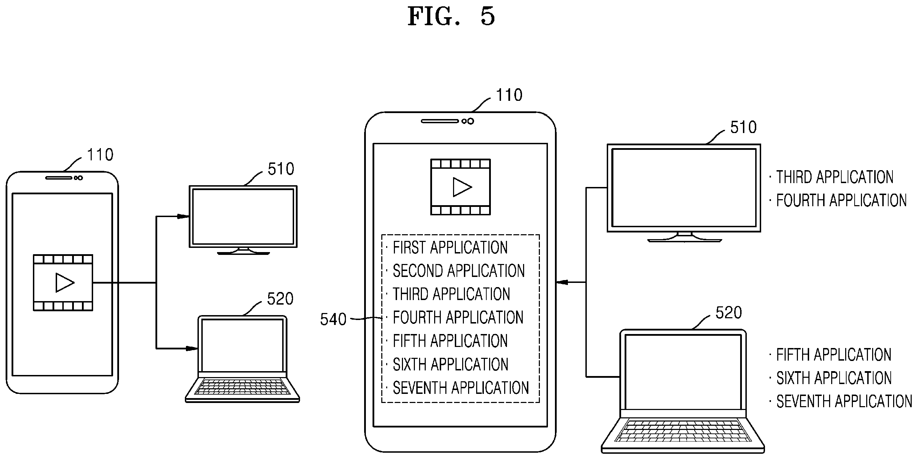

FIG. 5 is a diagram illustrating a process by which the electronic device 110 determines a recommended application for controlling the IoT device 120, based on device information and context information, according to an embodiment.

Referring to FIG. 5, the electronic device 110 may obtain device information regarding a function that the IoT device 120 is capable of performing. For example, the electronic device 110 may obtain device information indicating that a TV 510 and a laptop 520 have a function of playing video files.

In an embodiment, the electronic device 110 may determine, based on the device information and the context information, at least one recommended application for controlling the IoT device 120. For example, the electronic device 110 may determine at least one recommended application capable of playing video files. For example, the electronic device 110 may determine at least one recommended application on the electronic device 110, at least one recommended application for controlling the TV 510, and at least one recommended application for controlling the laptop 520.

For example, a first application and a second application having a video playback function on the electronic device 110 may be determined as recommended applications. Furthermore, a third application and a fourth application capable of executing a video playback function via the TV 510 may be determined as recommended applications. In addition, a fifth application, a sixth application, and a seventh application capable of executing a video playback function via the laptop 520 may be determined as recommended applications.

In an embodiment, the electronic device 110 may display an application recommendation list 540 based on the determined at least one recommended application. For example, the electronic device 110 may display the first application, the second application, the third application, the fourth application, the fifth application, the sixth application, and the seventh application as the application recommendation list 540. In an embodiment, the electronic device 110 may display the application recommendation list 540 on a display screen of the electronic device 110.

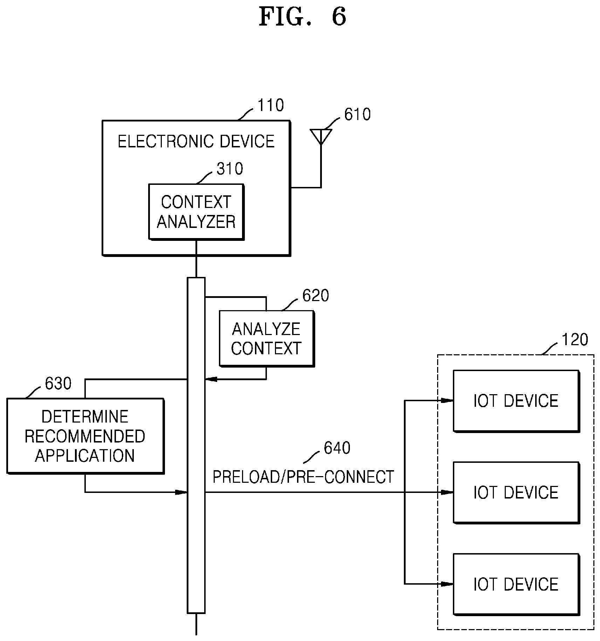

FIG. 6 is a diagram illustrating a process by which the electronic device 110 controls the IoT device 120, according to an embodiment.

Referring to FIG. 6, the electronic device 110 may obtain (610), from the IoT device 120, device information regarding a function that the IoT device 120 is capable of performing. In an embodiment, the electronic device 110 may obtain (610) context information related to the user's behavior.

In an embodiment, the electronic device 110 may include a context analyzer 310. In an embodiment, the context analyzer 310 may analyze (620) a context based on the device information and the context information.

In an embodiment, the context analyzer 310 may determine (630) at least one recommended application based on the device information and the context information. In an embodiment, when an application controlling the IoT device 120 is used on the electronic device 110, the context analyzer 310 may determine, based on the device information or context information, at least one recommended function that can be performed by the application.

In an embodiment, the electronic device 110 may determine (630), based on the device information and the context information, at least one recommended application for controlling the IoT device 120. In an embodiment, when an application controlling the IoT device 120 is used on the electronic device 110, the electronic device 110 may determine, based on the device information, at least one recommended function that can be performed by the application.

In an embodiment, the electronic device 110 may preload (640) data required to launch (or run or execute) the at least one recommended application determined based on the device information and the context information. In an embodiment, the electronic device 110 may preload (640) data required to execute the at least one recommended function determined based on the device information and the context information.

In an embodiment, before the at least one recommended application is launched (or executed), the electronic device 110 may pre-connect (640) the IoT device 120 controlled by the at least one recommended application. In an embodiment, before the at least one recommended function is executed, the electronic device 110 may pre-connect (640) the IoT device 120 performing the at least one recommended function.

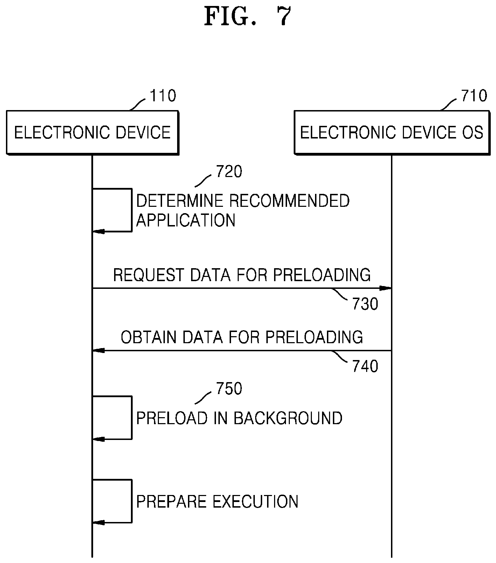

FIG. 7 is a diagram illustrating a process by which the electronic device 110 preloads data required to launch (or run or execute) a recommended application, according to an embodiment.

Referring to FIG. 7, the electronic device 110 may include an operating system (OS) 710 of the electronic device.

In an embodiment, the electronic device 110 may determine (720), based on device information and context information, at least one recommended application for controlling the IoT device 120.

In an embodiment, the electronic device 110 may request (730) the OS 710 of the electronic device 110 for data required to launch (or run or execute) the at least one recommended application. In an embodiment, the data required to launch (or run or execute) the at least one recommended application may include at least one of a system resource or a plug-in. However, the disclosure is not limited thereto.

In an embodiment, the electronic device 110 may obtain (740), from the OS 710 of the electronic device 110, the data required to launch (or run or execute) the at least one recommended application.

In an embodiment, software of the electronic device 110 may preload (750) data required to launch (or run or execute) the at least one recommended application. In an embodiment, preloading data required to launch (or run or execute) at least one recommended application may refer to preloading, in the background on the device, at least one of a system resource or a plug-in required to launch (or run or execute) the at least one recommended application. However, the disclosure is not limited thereto.

In an embodiment, the electronic device 110 may preload the data required to launch (or run or execute) the at least one recommendation application, so that when the user runs the application, the application may be launched (or executed) without requiring a load time.

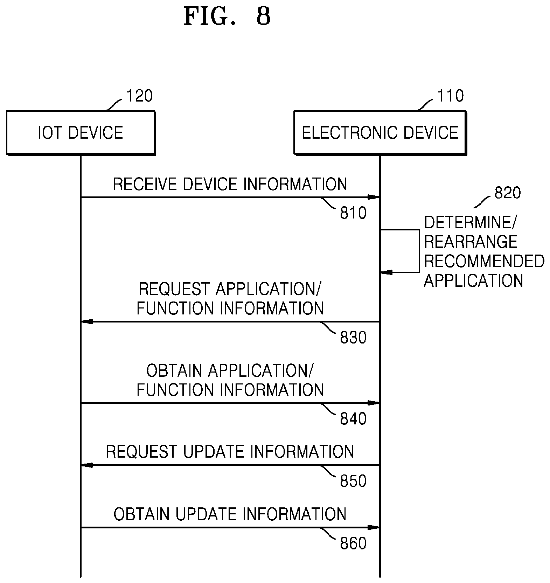

FIG. 8 is a diagram illustrating a process by which the electronic device 110 performs in advance an update required to launch a recommended application, according to an embodiment.

Referring to FIG. 8, the electronic device 110 may receive (810) device information transmitted by the IoT device 120. In an embodiment, the electronic device 110 may communicate with the IoT device 120 by using at least one of Bluetooth, Wi-Fi, or ultra-wideband (UWB). However, the disclosure is not limited thereto.

In an embodiment, the electronic device 110 may determine (820), based on the device information and context information, at least one recommended application for controlling the IoT device 120. In an embodiment, the context analyzer 310 may rearrange (820) at least one recommended application according to a change in the context information.

In an embodiment, the electronic device 110 may request (830) the IoT device 120 for information about an application that controls the IoT device 120. In an embodiment, the electronic device 110 may request (830) the IoT device 120 for information about a function that the IoT device 120 is capable of performing.

In an embodiment, the electronic device 110 may obtain (840), from the IoT device 120, the information about the application controlling the IoT device 120. In an embodiment, the electronic device 110 may obtain (840), from the IoT device 120, the information about the function that the IoT device 120 is capable of performing.

In an embodiment, the electronic device 110 may request (850) the IoT device 120 for information about an update required to launch (or run or execute) the at least one recommended application. In an embodiment, the electronic device 110 may request (850) the IoT device 120 for information about an update required to execute the function that the IoT device 120 is capable of performing.

In an embodiment, the electronic device 110 may obtain (860), from the IoT device 120, the information about the update required to launch (or run or execute) the at least one recommended application. In an embodiment, the electronic device 110 may obtain (860), from the IoT device 120, the information about the update required to execute the function that the IoT device 120 is capable of performing.

In an embodiment, the electronic device 110 may perform the update required to launch (or run or execute) the at least one recommended application before the at least one recommended application is launched (or executed). The electronic device 110 perform the update in advance, so that when the user runs the application, the application may be launched (or executed) without requiring an update time.

According to an embodiment, the electronic device 110 may perform an update necessary to execute a function that the IoT device 120 is capable of performing before the function is executed. By performing the necessary update in advance, when the user executes the function, the function may be executed without requiring an update time.

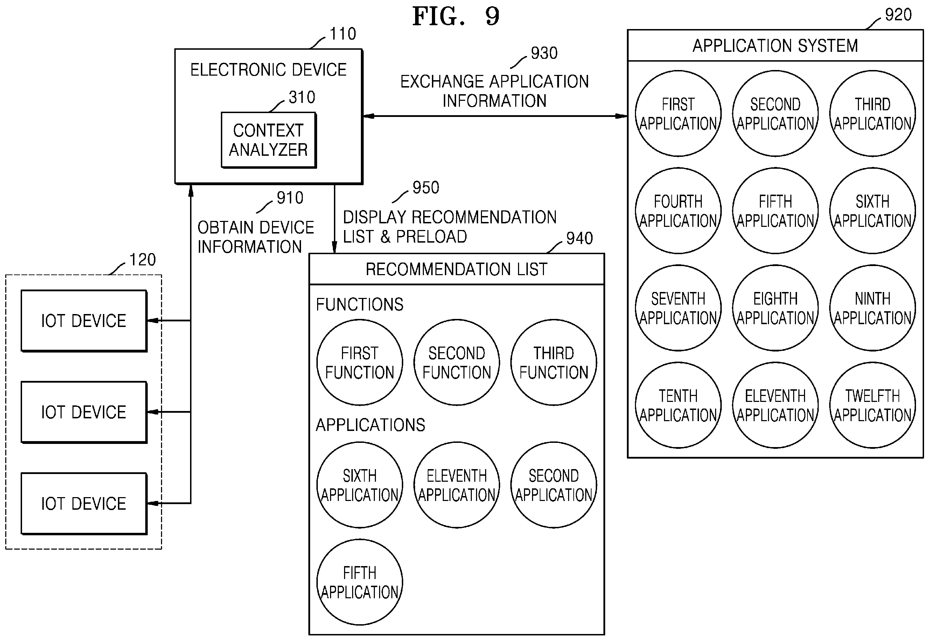

FIG. 9 is a diagram illustrating a process by which the electronic device 110 determines recommended applications or functions and displays a recommendation list, according to an embodiment.

Referring to FIG. 9, the electronic device 110 may include the context analyzer 310.

Because the context analyzer 310 has been described in detail with reference to FIG. 3, a detailed description thereof will be omitted herein.

In an embodiment, the electronic device 110 may obtain (910), from the IoT device 120, device information regarding a function that the IoT device 120 is capable of performing. In an embodiment, the electronic device 110 may obtain context information related to the user's behavior. In an embodiment, the electronic device 110 may communicate with the IoT device 120 by using at least one of Bluetooth, Wi-Fi, or UWB. However, the disclosure is not limited thereto.

In an embodiment, the electronic device 110 may exchange (930) application information with an application system 920. In an embodiment, the application system 920 may include a set of applications that are installed and available for use on the electronic device 110. In an embodiment, exchanging application information with the application system 920 may include exchanging information about a type of application or information about a function that can be performed by the application.

In an embodiment, the context analyzer 310 may analyze a context based on the device information and the context information.

In an embodiment, the electronic device 110 may determine, based on the device information and the context information, at least one recommended application for controlling the IoT device 120. In an embodiment, the electronic device 110 may determine, based on a result of the context analyzer 310 analyzing the context, at least one recommended application for controlling the IoT device 120.

In an embodiment, the context analyzer 310 may determine, based on the device information and the context information, at least one recommended application for controlling the IoT device 120. In an embodiment, the context analyzer 310 may determine, based on a result of the context analyzer 310 analyzing the context, at least one recommended application for controlling the IoT device 120.

In an embodiment, when an application controlling the IoT device 120 is used, the electronic device 110 may determine, based on the device information and the context information, at least one recommended function that can be performed by the application. In an embodiment, when an application controlling the IoT device 120 is used, the electronic device 110 may determine, based on a result of the context analyzer 310 analyzing the context, at least one recommended function that can be performed by the application.

In an embodiment, when an application controlling the IoT device 120 is used, the context analyzer 310 may determine, based on the device information and the context information, at least one recommended function that can be performed by the application. In an embodiment, when an application controlling the IoT device 120 is used, the context analyzer 310 may determine, based on a result of the context analyzer 310 analyzing the context, at least one recommended function that can be performed by the application.

In an embodiment, the electronic device 110 may display (950) an application recommendation list 940 based on the at least one recommended application. In an embodiment, the electronic device 110 may display (950) a function recommendation list 940 based on the at least one recommended function. In an embodiment, the electronic device 110 may display (950) the application recommendation list 940 on a display screen of the electronic device 110. In an embodiment, the electronic device 110 may display (950) the function recommendation list 940 on the display screen of the electronic device 110. In an embodiment, the electronic device 110 may simultaneously display (950) the recommended applications and functions.

In an embodiment, the electronic device 110 may preload (950) data required to launch (or run or execute) the at least one recommended application. By preloading the data required to launch (or run or execute) the at least one recommended application, the application may be launched (or executed) without requiring a load time when the user launches (or runs or executes) the application.

In an embodiment, the electronic device 110 may launch (or run or execute) at least one recommended application selected according to an external input signal for selecting at least one of the at least one recommended application. In an embodiment, the external input signal may represent an external input signal received by the display of the electronic device 110, as an input device, which is configured as a touch screen. However, the disclosure is not limited thereto.

In an embodiment, the electronic device 110 may preload (950) data required to execute the at least one recommended function. In an embodiment, the electronic device 110 may receive an external input signal for selecting at least one of the at least one recommended function. In an embodiment, the external input signal may represent an external input signal received by the display of the electronic device 110, as an input device, configured as a touch screen. However, the disclosure is not limited thereto.

In an embodiment, the electronic device 110 may redirect to a menu for controlling the IoT device 120 according to the received external input signal. In an embodiment, redirecting to the menu for controlling the IoT device 120 may indicate linking to a uniform resource locator (URL) capable of executing a menu for controlling the IoT device 120 with the selected recommended function, rather than a URL capable of executing the selected recommended function. However, the disclosure is not limited thereto.

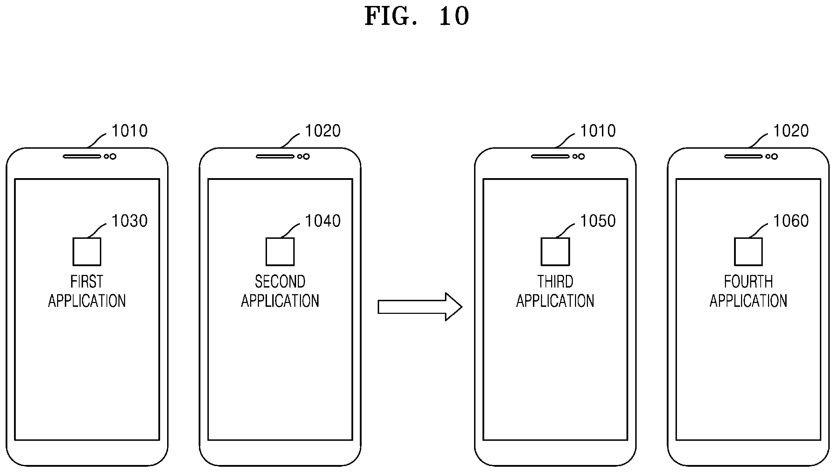

FIG. 10 is a diagram illustrating a process by which the electronic device 110 preloads data required to launch a recommended application according to a change in context information, according to an embodiment.

Referring to FIG. 10, a first electronic device 1010 may launch (or run or execute) an application selected by a user. For example, the first electronic device 1010 may launch (or run or execute) a first application 1030 selected by the user.

In an embodiment, a second electronic device 1020 may determine at least one recommended application based on the application being launched (or executed) on the first electronic device 1010. For example, the second electronic device 1020 may determine a second application 1040 as a recommended application based on the first application 1030 being launched (or executed) on the first electronic device 1010.

In an embodiment, at least one recommended application determined by the second electronic device 1020 may be an application related to the application being launched (or executed) on the first electronic device 1010. For example, the second application 1040 may be an application that is related to the first application 1030 in terms of a type, a function, a role, a field, or the like.

In an embodiment, the second electronic device 1020 may preload data required to launch (or run or execute) the at least one recommended application. For example, the second electronic device 1020 may preload in the background at least one of a system resource and a plug-in required to launch (or run or execute) the second application 1040.

In an embodiment, the second electronic device 1020 may rearrange at least one recommended application according to a change in the application being launched (or executed) on the first electronic device 1010. For example, when the first electronic device 1010 is launching (or executing) the first application 1030 and then launches (or runs or executes) a third application 1050, the second electronic device 1020 may rearrange a fourth application 1060 as a recommended application.

In an embodiment, the at least one recommended application rearranged by the second electronic device 1020 may be an application that is related to the application being launched (or executed) on the first electronic device 1010. For example, the fourth application 1060 may be an application that is related to the third application 1050 in terms of a type, a function, a role, a field, or the like.

In an embodiment, the second electronic device 1020 may preload data required to launch (or run or execute) the at least one recommended application. For example, the second electronic device 1020 may preload in the background at least one of a system resource and a plug-in required to launch (or run or execute) the fourth application 1060.

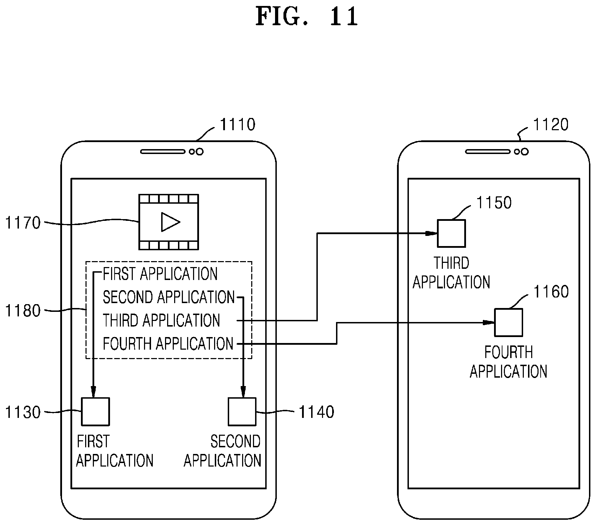

FIG. 11 is a diagram illustrating a process by which the electronic device 110 displays an application recommendation list, according to an embodiment.

Referring to FIG. 11, a first electronic device 1110 may determine, based on device information and context information, at least one recommended application for controlling the IoT device 120. For example, based on context information indicating that the user is attempting to play a video file 1170, the first electronic device 1110 may determine at least one application capable of playing the video file 1170 as a recommended application. For example, the at least one recommended application determined by the first electronic device 1110 may be a first application 1130, a second application 1140, a third application 1150, and a fourth application 1160.

In an embodiment, the first electronic device 1110 may display an application recommendation list 1180 based on the determined at least one recommended application. In an embodiment, the first electronic device 1110 may display the application recommendation list 1180 on a display screen of the first electronic device 1110. For example, the first electronic device 1110 may display, on the display screen, the first application 1130, the second application 1140, the third application 1150, and the fourth application 1160 as the application recommendation list 1180.

In an embodiment, the first application 1130 and the second application 1140 may be applications capable of playing the video file 1170 on the first electronic device 1110. Furthermore, the third application 1150 and the fourth application 1160 may be applications capable of playing the video file 1170 on the second electronic device 1120.

In an embodiment, the first electronic device 1110 may preload data required to launch (or run or execute) the at least one recommended application. For example, the first electronic device 1110 may preload in the background at least one of system resources and plug-ins required to execute the first application 1130, the second application 1140, the third application 1150, and the fourth application 1160.

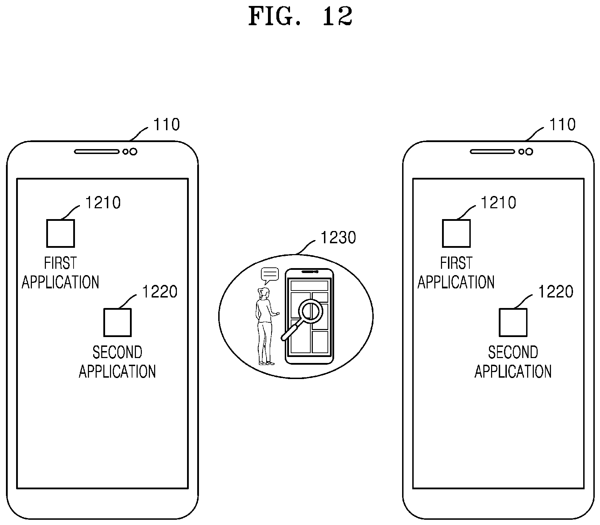

FIG. 12 is a diagram illustrating a process by which the electronic device 110 rearranges recommended applications according to a change in context information, according to an embodiment.

Referring to FIG. 12, the electronic device 110 may determine, based on device information and context information, at least one recommended application for controlling the IoT device 120. For example, the electronic device 110 may determine a first application 1210 as a recommended application.

In an embodiment, the electronic device 110 may display an application recommendation list based on the determined at least one recommended application. In an embodiment, the electronic device 110 may display the application recommendation list on a display screen of the electronic device 110.

In an embodiment, the electronic device 110 may launch (or run or execute) at least one recommended application selected according to an external input signal for selecting at least one of the at least one recommended application. For example, the electronic device 110 may launch (or run or execute) the first application 1210 according to an external input signal for selecting the first application 1210.

In an embodiment, the electronic device 110 may rearrange at least one recommended application according to a change 1230 in the context information. For example, the electronic device 110 may recognize that the context information changes via the user's behavior and determine and rearrange a second application 1220 as a recommended application. In an embodiment, the electronic device 110 may display an application recommendation list based on the rearranged at least one recommended application.

In an embodiment, the electronic device 110 may preload data required to launch (or run or execute) the at least one recommended application that is rearranged according to the change in the context information. For example, the electronic device 110 may preload in the background at least one of a system resource and a plug-in required to launch (or run or execute) the second application 1220.

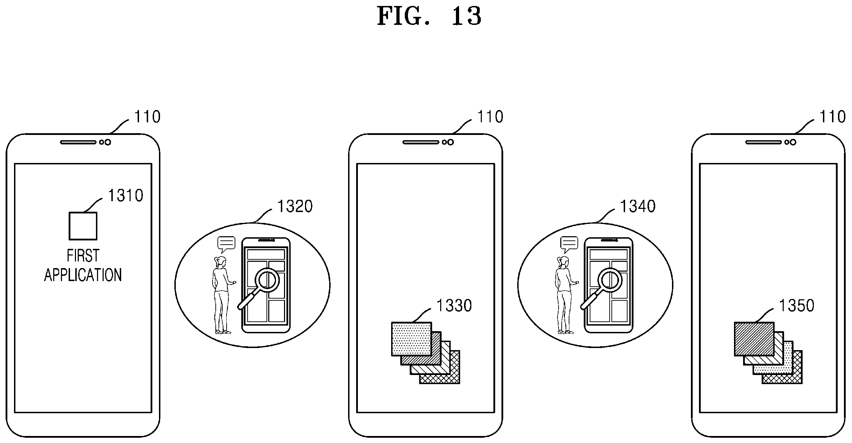

FIG. 13 is a diagram illustrating a process by which the electronic device 110 rearranges recommended applications in order of priority according to a change in context information, according to an embodiment.

Referring to FIG. 13, the electronic device 110 may launch (or run or execute) an application selected by the user. For example, the electronic device 110 may launch (or run or execute) a first application 1310 selected by the user.

In an embodiment, the electronic device 110 may determine, based on device information and context information, at least one recommended application for controlling the IoT device 120. In an embodiment, the electronic device 110 may display an application recommendation list based on the determined at least one recommended application. In an embodiment, the electronic device 110 may display the application recommendation list on a display screen of the electronic device 110.

In an embodiment, the electronic device 110 may rearrange at least one recommended application according to a change 1320 in the context information. In an embodiment, the electronic device 110 may display an application recommendation list based on the rearranged at least one recommended application. For example, the electronic device 110 may recognize the change 1320 in the context information via the user's behavior and determine and display an application recommendation list by rearranging the at least one recommended application.

In an embodiment, the electronic device 110 may display an application recommendation list 1330 including priorities. In one embodiment, the priorities may be determined based on the context information by taking into account relevance, necessity, and user preferences.

In an embodiment, the electronic device 110 may preload data required to launch (or run or execute) the at least one recommended application that is rearranged according to the change 1320 in the context information.

In an embodiment, the electronic device 110 may repeatedly rearrange at least one recommended application according to a change 1340 in the context information. In an embodiment, the electronic device 110 may display an application recommendation list based on the iteratively rearranged at least one recommended application.

In an embodiment, the electronic device 110 may display an application recommendation list 1350 including priorities, based on the iteratively rearranged at least one recommended application. In an embodiment, the application recommendation list 1350 including the priorities may indicate different priorities than the application recommendation list 1330 including priorities before being rearranged. In an embodiment, the electronic device 110 may preload data required to launch (or run or execute) the at least one recommended application that is iteratively rearranged according to the change in the context information.

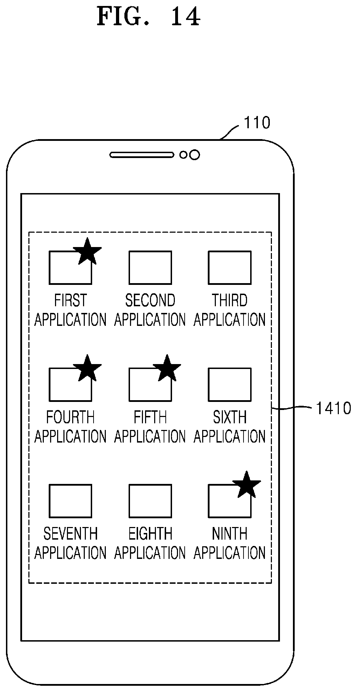

FIG. 14 is a diagram illustrating a favorites list on the electronic device 110, according to an embodiment.

Referring to FIG. 14, the electronic device 110 may provide a function of designating at least one application frequently used by the user as a favorite. In an embodiment, the electronic device 110 may determine at least one recommended application based on a favorites list 1410. In an embodiment, the electronic device 110 may determine at least one recommended function based on the favorites list 1410.

In an embodiment, the electronic device 110 may display an application recommendation list based on the at least one recommended application determined based on the favorites list 1410. In an embodiment, the electronic device 110 may display a function recommendation list based on the at least one recommended function determined based on the favorites list 1410.

In an embodiment, the electronic device 110 may rearrange at least one recommended application according to a change in the favorites list 1410. In an embodiment, the electronic device 110 may rearrange at least one recommended function according to a change in the favorites list 1410.

In an embodiment, the electronic device 110 may preload data required to launch (or run or execute) the at least one recommended application determined based on the favorites list 1410. In an embodiment, the electronic device 110 may preload data required to execute the at least one recommended function determined based on the favorites list 1410.

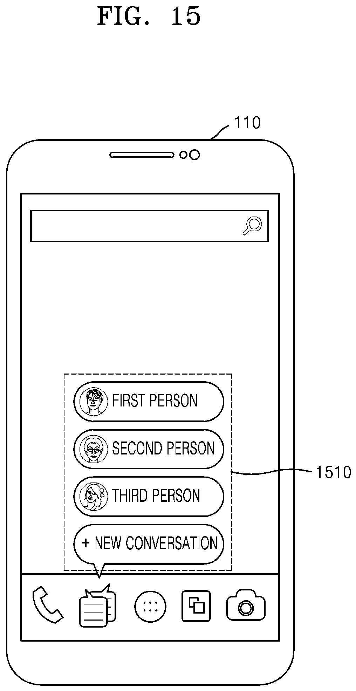

FIG. 15 is a diagram illustrating shortcut setting on the electronic device 110, according to an embodiment.

Referring to FIG. 15, the electronic device 110 may provide a shortcut setting function that allows the user to easily access a task on a home screen of the electronic device 110. For example, the electronic device 110 may provide a shortcut setting function to allow the user to transmit a text message to a desired person. For example, a shortcut setting 1510 may be displayed as a person's name so that when the person's name is selected, a screen for transmitting a text message is displayed.

In an embodiment, the electronic device 110 may determine at least one recommended application based on the shortcut setting 1510. In an embodiment, the electronic device 110 may determine at least one recommended function based on the shortcut setting 1510.

In an embodiment, the electronic device 110 may display an application recommendation list based on the at least one recommended application determined based on the shortcut setting 1510. In an embodiment, the electronic device 110 may display a function recommendation list based on the at least one recommended function determined based on the shortcut setting 1510.

In an embodiment, the electronic device 110 may rearrange at least one recommended application according to a change in the shortcut setting 1510. In an embodiment, the electronic device 110 may rearrange at least one recommended function according to a change in the shortcut setting 1510.

In an embodiment, the electronic device 110 may preload data required to launch the at least one recommended application determined based on the shortcut setting 1510. In an embodiment, the electronic device 110 may preload data required to execute the at least one recommended function determined based on the shortcut setting 1510.

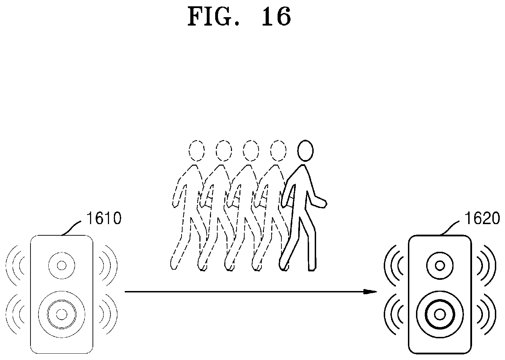

FIG. 16 is a diagram illustrating switching of a connection from a first IoT device 1610 to a second IoT device 1620, according to an embodiment.

Referring to FIG. 16, when switching a connection from the first IoT device 1610 to the second IoT device 1620, the electronic device 110 may pre-connect the second IoT device 1620 so that the switching may be performed seamlessly. In an embodiment, the electronic device 110 may obtain information about the second IoT device 1620 to which the connection may be switched based on device information and context information.

For example, the first IoT device 1610 may be a first speaker. A user may be listening to music played via the first speaker in a first room. The first speaker may be connected to the electronic device 110 of the user. By executing a music application on the electronic device 110, music may be playing over the first speaker. When the user moves from the first room to a second room, the first speaker may be farther away from the electronic device 110 and disconnected therefrom, causing the music being played via the first speaker to stop playing.

For example, the second device 1620 may be a second speaker. The electronic device 110 may obtain device information regarding the second speaker in the second room. The electronic device 110 may pre-connect the second speaker based on context information indicating that the user is moving from the first room to the second room. When the user moves from the first room to the second room, the connection may be seam lessly switched from the first speaker to the pre-connected second speaker, allowing music to continue being played.

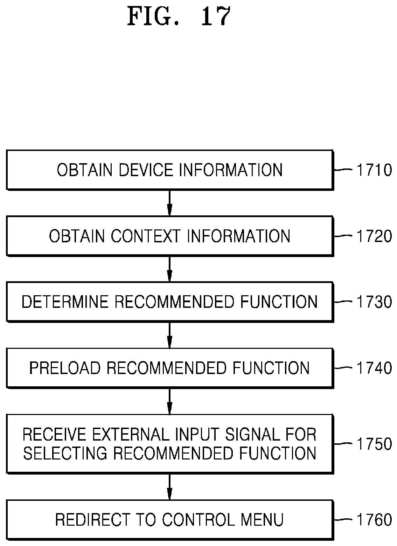

FIG. 17 is a flowchart of a method, performed by the electronic device 110, for controlling the IoT device 120, according to an embodiment.

Referring to FIG. 17, in operation 1710, the electronic device 110 may obtain device information regarding a function that the IoT device 120 is capable of performing. In an embodiment, the device information may include at least one of information about a type of the IoT device or information about a function that the IoT device is capable of performing.

In operation 1720, the electronic device 110 may obtain context information related to the user's behavior. The context information may refer to information that is understood according to a surrounding situation, environment, and context. In an embodiment, the context information may include at least one of information stored by the user, information learned by the user's behavior, information obtained by a proximity sensor, or information associated with the context information. However, the disclosure is not limited thereto.

In an embodiment, an application controlling the IoT device 120 may be installed and used on the electronic device 110. In an embodiment, the electronic device 110 may execute, on the application controlling the IoT device 120, at least one function that the IoT device 120 is capable of performing via the application. For example, when the electronic device 110 is a Samsung smartphone, the application controlling the IoT device 120 may be a SmartThings application. However, the disclosure is not limited thereto.

In operation 1730, when an application controlling the IoT device 120 is used, the electronic device 110 may determine, based on the device information and the context information, at least one recommended function that can be performed by the application. For example, when it is determined, based on the device information and the context information, that the user needs to control an indoor temperature by running an air conditioner, the electronic device 110 may determine a function capable of controlling the air conditioner via a SmartThings application as at least one recommended function.

In operation 1740, the electronic device 110 may preload data required to execute the at least one recommended function determined based on the device information and the context information. In an embodiment, preloading data required to execute at least one recommended function may refer to preloading at least one of a system resource or a plug-in required to execute the at least one recommended function in the background on the device. By preloading the at least one recommended function, when the user executes the function, the function may be executed without any load time.

In operation 1750, the electronic device 110 may receive an external input signal for selecting at least one of the at least one recommended function. In an embodiment, selecting at least one of the at least one recommended function may refer to selecting at least one recommended function on an application having functions of controlling the IoT device 120. In an embodiment, the external input signal may represent an external input signal received by the display of the electronic device 110, as an input device, configured as a touch screen. However, the disclosure is not limited thereto.

In operation 1760, the electronic device 110 may redirect to a menu for controlling the IoT device 120 according to the received external input signal. According to an embodiment, when an application with functions to control the IoT device 120 is being used on the electronic device 110, the electronic device 110 may redirect to a menu for controlling the IoT device 120 to perform at least one recommended function selected according to the external input signal for selecting at least one recommended function in the application.

In an embodiment, redirecting to the menu for controlling the IoT device 120 may indicate linking to a URL capable of executing a menu for controlling the IoT device 120 with the selected recommended function, rather than a URL capable of executing the selected recommended function. However, the disclosure is not limited thereto.

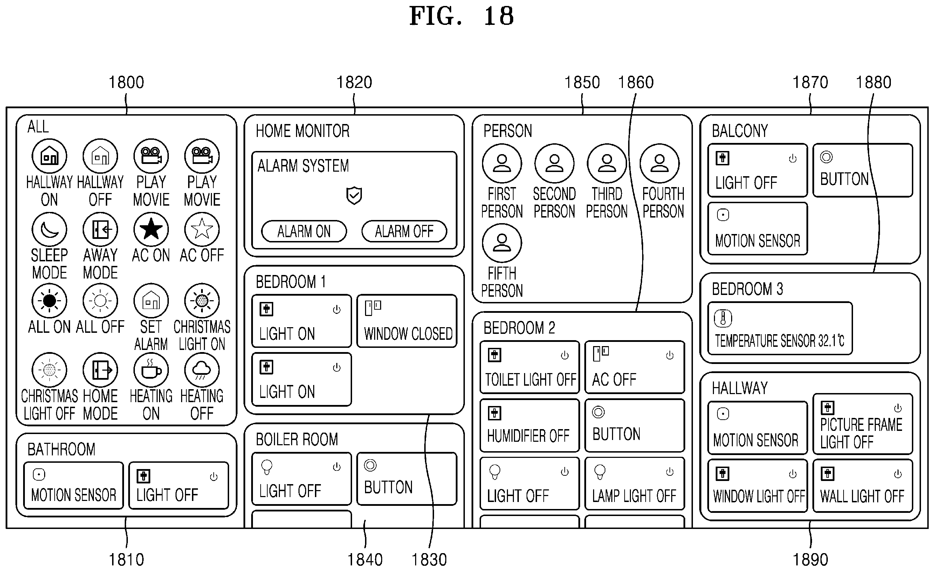

FIG. 18 is a diagram illustrating at least one recommended function on an application when the application controlling the IoT device 120 is used on the electronic device 110, according to an embodiment.

Referring to FIG. 18, an application controlling the IoT device 120 may be installed and used on the electronic device 110. In an embodiment, at least one function that the IoT device 120 is capable of performing via the application controlling the IoT device 120 may be executed on the application. For example, when the electronic device 110 is a Samsung smartphone, the application controlling the IoT device 120 may be a SmartThings application. However, the disclosure is not limited thereto.

In an embodiment, when the application controlling the IoT device 120 is used, the electronic device 110 may determine, based on device information and context information, at least one recommended function that can be performed by the application. In an embodiment, the electronic device 110 may display a function recommendation list based on the determined at least one recommended function.

For example, on a SmartThings application, all control functions in rooms may be displayed (1800). A function capable of controlling at least one of light and a motion sensor in a bathroom may be displayed (1810).

Furthermore, a function capable of controlling an alarm system via a home monitor may be displayed (1820). Furthermore, a function capable of controlling at least one of a light, a window, a toilet light, a humidifier, a button, a lamp light, an air conditioner, and a temperature sensor in a bedroom may be displayed (1830, 1860, and 1880).

Furthermore, a function capable of controlling at least one of a light and a button in a boiler room can be displayed (1840). Furthermore, a function capable of controlling at least one of a light, a button, and a motion sensor in a balcony may be displayed (1870).

Furthermore, a function capable of controlling at least one of a light and a motion sensor in a hallway may be displayed (1890). In addition, a function capable of accessing contacts to make calls or send text messages may be displayed (1850).

In an embodiment, the electronic device 110 may preload data required to execute the at least one recommended function. For example, the electronic device 110 may preload, in the background, at least one of a system resource and a plug-in required to execute a function capable of controlling a light in the bedroom.

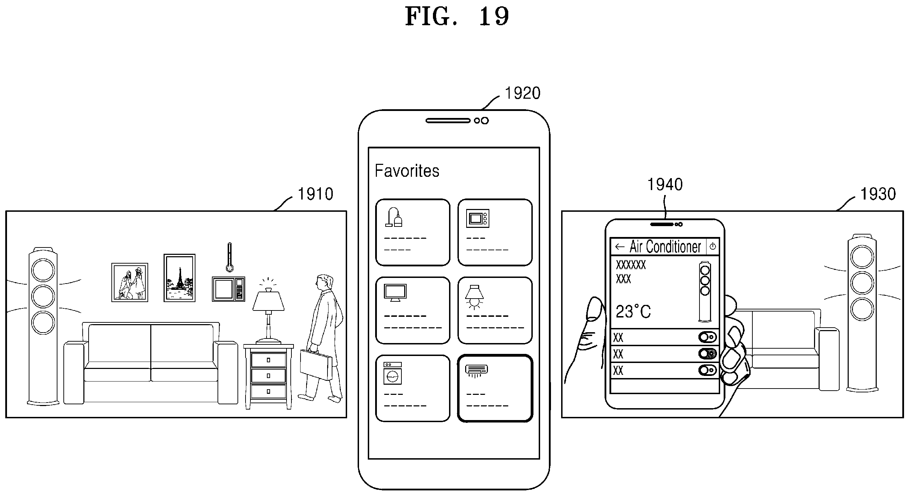

FIG. 19 is a diagram illustrating a process by which the electronic device 110 redirects to a menu for controlling the IoT device 120 according to an external input signal for selecting at least one of at least one recommended function, according to an embodiment.

Referring to FIG. 19, the electronic device 110 may obtain device information regarding a function that the IoT device 120 is capable of performing. For example, the electronic device 110 may obtain information indicating that an air conditioner as a smart air conditioner can be controlled via the electronic device 110. Furthermore, the electronic device 110 may obtain information indicating that the air conditioner has a function capable of controlling an indoor temperature.

In an embodiment, the electronic device 110 may obtain (1910) context information related to the user's behavior. For example, the electronic device 110 may obtain (1910) information indicating that the user has returned home from work. In addition, the electronic device 110 may obtain information about a current weather and an indoor temperature.

In an embodiment, when an application controlling the IoT device 120 is used, the electronic device 110 may determine, based on the device information and the context information, at least one recommended function that can be performed by the application. For example, when a SmartThings application controlling an air conditioner is installed on the electronic device 110, the electronic device 110 may determine an indoor temperature control function of the air conditioner that can be performed by the SmartThings application as being a recommended function.

In an embodiment, the electronic device 110 may display (1920) a function recommendation list based on the determined at least one recommended function. For example, the electronic device 110 may display (1920) a function of controlling an indoor temperature via the SmartThings application on the electronic device 110 in a recommendation list.

In an embodiment, the electronic device 110 may preload data required to execute the at least one recommended function. For example, the electronic device 110 may preload in the background at least one of a system resource and a plug-in required to execute the indoor temperature control function of the air conditioner.

In an embodiment, the electronic device 110 may receive an external input signal for selecting at least one of the at least one recommended function. In an embodiment, the electronic device 110 may redirect to a menu 1940 for controlling the IoT device 120 according to the received external input signal. For example, when the user selects the indoor temperature control function on the SmartThings application, the electronic device 110 may redirect to the function menu 1940 for controlling the air conditioner. For example, when there is an application controlling the air conditioner, the application may be launched (or executed) on the electronic device 110, and the electronic device 110 may redirect to the function menu 1940 for controlling the air conditioner.

In an embodiment, before the at least one recommended function is executed, the electronic device 110 may pre-connect (1930) the IoT device 120 performing the at least one recommended function. For example, the air conditioner may be pre-connected (1930) to the electronic device 110 before the room temperature control function is executed to reduce the time required for connection.

In an embodiment, the electronic device 110 may rearrange at least one recommended function according to a change in the context information. For example, when the indoor temperature becomes lower than an ideal temperature, the electronic device 110 may rearrange a function of stopping operation of the air conditioner as a recommended function.

In a method for controlling an IoT device according to an embodiment, context information may include at least one of information stored by a user, information learned by a user's behavior, information obtained by a proximity sensor, and information associated with the context information.

According to an embodiment, the method for controlling the IoT device may include performing in advance an update required to launch at least one recommended application.

According to an embodiment, the method for controlling the IoT device may include displaying an application recommendation list based on the determined at least one recommended application.

According to an embodiment, the method for controlling the IoT device may include rearranging the at least one recommended application according to a change in the context information.

According to an embodiment, the method for controlling the IoT device may include determining the at least one recommended application based on a favorites list.

According to an embodiment, the method for controlling the IoT device may include determining the at least one recommended application based on shortcut setting.

According to an embodiment, the method for controlling the IoT device may include pre-connecting the IoT device controlled by the at least one recommended application before the at least one recommended application is launched.

According to an embodiment, the method for controlling the IoT device may include, in case that switching a connection from the IoT device to another IoT device, pre-connecting the other IoT device so that the switching may be performed seamlessly.

According to an embodiment, the method for controlling the IoT device may include displaying a function recommendation list based on determined at least one recommended function.

According to an embodiment, the method for controlling the IoT device may include rearranging the at least one recommended function according to a change in the context information.

According to an embodiment, the method for controlling the IoT device may include determining the at least one recommended function based on a favorites list.

According to an embodiment, the method for controlling the IoT device may include determining the at least one recommended function based on shortcut setting.

According to an embodiment, the method for controlling the IoT device may include, before the at least one recommended function is executed, pre-connecting the IoT device performing the at least one recommended function.

According to an embodiment, the method for controlling the IoT device may include, when switching a connection from the IoT device to another IoT device, pre-connecting the other IoT device so that the switching may be performed seamlessly.

A method for controlling an IoT device, according to an embodiment, may be implemented in the form of program commands that may be performed by various types of computers, and recorded on computer-readable recording media. The computer-readable recording media may include program commands, data files, data structures, etc. either alone or in combination. The program commands recorded on the computer-readable recording media may be designed and configured specially for the disclosure or may be known to and be usable by those of ordinary skill in the art of computer software. Examples of the computer-readable recording media include magnetic media such as hard disks, floppy disks, and magnetic tapes, optical media such as compact disk read-only memory (CD-ROM) and digital versatile disks (DVDs), magneto-optical media such as floptical disks, and hardware devices that are specially configured to store and perform program commands, such as ROM, random access memory (RAM), flash memory, etc. Examples of program commands include not only machine code such as that created by a compiler but also high-level language code that may be executed by a computer using an interpreter or the like.

In addition, methods for controlling an IoT device according to disclosed embodiments may be included in a computer program product when provided. The computer program product may be traded, as a product, between a seller and a buyer.

The computer program product may include a software program and a computer-readable storage medium having the software program stored thereon. For example, the computer program product may include a product (e.g., a downloadable application) in the form of a software program electronically distributed by a manufacturer of an electronic device or through an electronic market (e.g., Google Play Store ^{™}, and App Store ^{™}). For such electronic distribution, at least a part of the software program may be stored on the storage medium or may be temporarily generated. In this case, the storage medium may be a storage medium of a server of the manufacturer, a server of the electronic market, or a relay server for temporarily storing the software program.

**In** a system consisting of a server and a client device, the computer program product may include a storage medium of the server or a storage medium of the client device. Alternatively, in a case where there is a third device (e.g., a smartphone) communicatively connected to the server or client device, the computer program product may include a storage medium of the third device. Alternatively, the computer program product may include a software program itself that is transmitted from the server to the client device or the third device or that is transmitted from the third device to the client device.

**In** this case, one of the server, the client device, and the third device may execute the computer program product to perform the methods according to the disclosed embodiments. Alternatively, at least two of the server, the client device, and the third device may execute the computer program product to perform the methods according to the disclosed embodiments in a distributed manner.

For example, the server (e.g., a cloud server, an artificial intelligence (AI) server, or the like) may execute the computer program product stored therein to control the client device communicatively connected to the server to perform the methods according to the disclosed embodiments.

While embodiments have been particularly described above, the embodiments are not to be construed as limiting the scope of the disclosure, and various modifications and improvements made by those of ordinary skill in the art based on a basic concept of the disclosure also fall within the scope of the disclosure as defined by the following claims.

## Claims

1. A method for controlling an Internet of Things (IoT) device, the method comprising:
obtaining device information regarding a function that the IoT device (120) is capable of performing (210);
obtaining context information related to a user's behavior (220);
determining, based on the device information and the context information, at least one recommended application for controlling the IoT device (120) (230);
preloading data required to launch the at least one recommended application (240); and
according to an external input signal for selecting at least one of the at least one recommended application, launching the selected at least one recommended application (250).

2. The method of claim 1, further comprising performing in advance an update required to launch the at least one recommended application.

3. The method of claim 1, further comprising rearranging the at least one recommended application according to a change in the context information.

4. The method of claim 1, further comprising, before the at least one recommended application is launched, pre-connecting the IoT device controlled by the at least one recommended application.

5. The method of claim 1, further comprising:
in case that an application controlling the IoT device (120) is used, determining, based on the device information and the context information, at least one recommended function that can be performed by the application (1730);
preloading data required to execute the at least one recommended function (1740);
receiving an external input signal for selecting at least one of the at least one recommended function (1750); and
redirecting to a menu for controlling the IoT device (120) according to the received external input signal (1760).

6. The method of claim 5, further comprising rearranging the at least one recommended function according to a change in the context information.

7. The method of claim 5, further comprising, before the at least one recommended function is executed, pre-connecting the IoT device performing the at least one recommended function.

8. An electronic device (110) for controlling an Internet of Things (IoT) device (120), the electronic device (110) comprising:
a memory (130) storing one or more instructions; and
at least one processor (140),
wherein the at least one processor (140) is configured to execute the at least one instruction to
obtain device information regarding a function that the IoT device is capable of perform ing,
obtain context information related to a user's behavior,
determine, based on the device information and the context information, at least one recommended application for controlling the IoT device,
preload data required to launch the at least one recommended application, and
according to an external input signal for selecting at least one of the at least one recommended application, launch the selected at least one recommended application.

9. The electronic device (110) of claim 8, wherein the at least one processor (140) is further configured to execute the at least one instruction to perform in advance an update required to launch the at least one recommended application.

10. The electronic device (110) of claim 8, wherein the at least one processor (140) is further configured to execute the at least one instruction to
rearrange the at least one recommended application according to a change in the context information.

11. The electronic device (110) of claim 8, wherein the at least one processor (140) is further configured to execute the at least one instruction to,
before the at least one recommended application is launched, pre-connect the IoT device controlled by the at least one recommended application.

12. The electronic device (110) of claim 8, wherein
the at least one processor (140) is further configured to execute the at least one instruction to,
in case that an application controlling the IoT device (120) is used, determine, based on the device information and the context information, at least one recommended function that can be performed by the application,
preload data required to execute the at least one recommended function,
receive an external input signal for selecting at least one of the at least one recommended function, and
redirect to a menu for controlling the IoT device (120) according to the received external input signal.

13. The electronic device (110) of claim 8, wherein the at least one processor (140) is further configured to execute the at least one instruction to
rearrange the at least one recommended function according to a change in the context information.

14. The electronic device (110) of claim 8, wherein the at least one processor (140) is further configured to execute the at least one instruction to, before the at least one recommended function is executed, pre-connect the IoT device performing the at least one recommended function.

15. A computer-readable recording medium having stored thereon a program for performing the method of any one of claims 1 to 7.
